# EUROPEAN PATENT SPECIFICATION

(11) **EP 0 909 262 B1**
(45) Date of publication and mention of the grant of the patent: **25.04.2001**
(21) Application number: 97920919.4
(22) Date of filing: 28.05.1997
(51) Int. Cl.: C03B 5/00, C03C 1/00, B09B 3/00, C04B 18/10, C04B 14/22

(54) **PROCESS FOR THE PRODUCTION OF AMORPHOUS MATERIAL FROM WASTES**
VERFAHREN ZUM HERSTELLEN EINES AMORPHEN MATERIALS AUS ABFÄLLEN
PROCEDE DE PRODUCTION D'UN MATERIAU AMORPHE A PARTIR DE DECHETS

(30) Priority: 29.05.1996 EP 96108485
(43) Date of publication of application: 21.04.1999
(73) Proprietor: DE GIOVANNINI S.A., 1006 Lausanne (CH)
(72) Inventor: VOLOKHONSKY, Lev Avramovitch, Moscow, 109444 (RU); PETROV, Victor Pavlovitch, Samara, 443115 (RU); KATZ, Konstantin Mikhailovitch, 28757 Bremen (DE)
(74) Representative: Micheli & Cie
(86) International application number: IB9700608
(87) International publication number: WO9745376

(56) References cited:
- EP-A- 0 035 850
- EP-A- 0 398 298
- EP-A- 0 493 217
- EP-A- 0 575 874
- WO-A-90/09211
- WO-A-94/24060
- DE-A- 4 023 561
- DE-A- 4 339 176
- FR-A- 2 711 078
- US-A- 5 273 566

## Description

The present invention relates to a process for the production of amorphous material from non sorted wastes, i.e. from any solid and/or liquid waste material, such as household and any kind of industrial wastes, including of energy production wastes, without the need of previously separating them according to their nature, as well as from slags and/or fly ashes produced by other usual wastes treatment plants. The amorphous material obtained by this process can advantageously be used as building material, especially in the preparation of light concrete, or in the production of light porous aggregates usable as insulating material, as drainage filling, as filtering material, as well as in agriculture, especially in hydroponics.

A method of light aggregates production especially from household wastes is already known from JP-A-56/14628, which involves burning the wastes in a fluidized bed furnace (i.e. at a temperature lower than about 900°C), grinding the product obtained and mixing it with the dust formed during the burning step. The heavy metals (such as Zn, Ni, Cr, Cd, Pb, Ti, etc.) are thus retained in the granules, which is not wished, since their oxides might pass into water solutions thereby decreasing the chemical resistance of the aggregate, and especially due to the fact that they are very toxic and constitute a potential pollution for the environment.

It is also known from RU-A-1534028 a process for producing porous aggregates usable for example as building material from various wastes, such as solid domestic wastes, slags of heat electric power stations generated by coal, clay materials, as well as wastes from galvano-chemical productions, etc., in which the burning temperature is of about 940-950°C. Also with this process some oxides of heavy metals stay in a free state, so that they could pass into aqueous solutions, and the chemical resistance of the aggregates obtained is thus not sufficient.

A process for manufacturing particles of high hardness is further disclosed in US Patent 5,273,566, which is essentially based on the treatment of inorganic wastes especially produced from the aluminium industry.

The purpose of the present invention is therefore to provide an improved process for the production of amorphous material, which obviates to the drawbacks of the known comparable methods, and especially which can be carried out with non sorted wastes and which leads to an amorphous material essentially free of heavy metals oxides, or more precise in which the heavy metals have been "neutralized" as being blocked in the glazed or vitrificated mass of the material produced.

This aim was reached by the process according to the invention, as defined in claim 1.

According to particular embodiments of the invention, the process may comprise the steps of drying the wastes at 600-800°C and then of heat treating and pre-melting them at 1000-1200°C. Furthermore, and more particularly in the case of using slags as wastes, in continuous manner, said slags are premelted at 1000-1200°C, on a sloping hearth and the melt is treated at 1300-1450°C in a crucible.

Generally, the heat treating step is carried out during 5 to 10 min. and the melting step during 20 to 40 min. for example under air splash lubrication, and the fast cooling step takes place at a speed of about 500-600°C by minute; thus this fast or shock cooling step is similar to a quenching of the mass treated so as to make it vitrified or glazed.

For working the above particular process, the steps of heat treating the wastes, i.e. the slags, and melting them are carried out in an apparatus which comprises a sloping hearth, a crucible located under said hearth for homogeneizing the melt, a quenching bath located under said crucible for fast cooling the melt and means for recovering the amorphous material from said bath.

The sloping sole is used more particularly for preheating and melting the wastes, resulting in the evaporation of all volatile matters, oxidation of organics and melting of minerals and metals The melt then flows down the slope in the form of a relatively thin layer towards the crucible, providing a high degree of refining. Preferably, the external surface of the sloping sole is covered with a coating especially made of refractory materials, such as alumina and magnesia. In the crucible, and before being submitted to the final fast cooling, the necessary additives are provided so as to proceed with the correction of the chemical composition, and the melt is homogeneized and overheated for providing a higher fluidity thereof.

Preferably, the oxides contents ratio of the complementary products added are the following : 55-65% of silicon oxide, 10-22% of aluminium oxide, 3-6% of iron oxides, 3-7% of alkali metals oxides (such as K₂O and Na₂O) and 3-7% of alkaline-earth metals oxides (such as CaO and MgO).

The correcting added products which can be used in practice are as silicon containing complementary product quartz sand, sandy loam, flask or tropoyl, as aluminium containing complementary product clay, loam, bauxite, ashes of heat power stations, and as iron containing complementary product burden dust or pyrite candle ends.

Of course, the addition of the correcting oxides implies the preliminary analysis of the product composition obtained by the process; the control of the composition should be repeated at least each time that the type of starting material is changed.

According to an object of a preferred embodiment of the invention, the amorphous material obtained can be further submitted to the steps of grinding and granulating said material, then of roasting the granules formed in presence of organic compounds and binders, which are added during the grinding step and/or the granulation step, and so as to produce light porous aggregates.

Preferably, for the production of such porous aggregates granules, from 0.5 to 1.5 wt% of organic compounds are added, which can be selected from solid or liquid organic containing materials such as coal, oil slurry and used oil, and from 1.5 to 15 wt% of binders are added, which can be for example highly plastic clays or a solution of glassware.

In order to decrease the fuel consumption and to decrease the formation of nitric oxides during the melting step, smoke gases from the final roasting step can be advantageously used for the drying steps and then for the melting step, or directly for the melting step.

It is to be repeated here that as starting material for the process according to this invention, any kind of wastes (for example domestic, building, street cleaning, industrial, etc. wastes) can be used, without the need to formerly sort them; all kinds of wastes can effectively be processed altogether. Also, as pointed out before, slags and/or fly ashes produced by other usual wastes treating plants can be advantageously submitted to the process according to the present invention, especially in order to "neutralize" the heaving metals which they still contain after the usual treatment.

During the melting step at high temperature (> 1300°C), the organic part of the wastes (i.e. wood, plastic, cloth, paper, bones, etc.) is burned and the mineral part (glass, stones, sand, concrete, ashes, dust, etc.) form slag and which goes up from metals which form alloys and go down. When liquid wastes are treated (such as slurry, solutions from chemical and galvanic industry, etc.) the solid remainders after the treatment of high temperature are also separated into mineral part forming slag and metals turning into alloy as mentioned before.

The "correction" of respective oxides contents in the melt of wastes up to the required limits allows to get a chemically hard alumosilicate glass mass. In this mass, oxides of aluminium and silicon are partially replaced by oxides of heavy metals. For getting liquid phase in the process for producing granules necessary for the expansion of said granules at temperature of 1000-1200°C, a part of silicon and aluminium oxides are replaced by iron oxides. Injection of organic materials (about 0.5-1.5%) makes it available to form gas phase and swell of granules liquid phase at temperature 1000-1200°C. Decreasing or increasing of organic and iron components leads to inadequate swell of granules or cavities in them. Injection of 1.5-15% binders is advantageous for the formation of granules from non plastic glass mass powder. Solid organics and binders are inserted during grinding of glass mass, and liquid ones are inserted during preparation of charge into granules, for example in a clay mixer. Additions that "correct" content of oxides in the melt also depend on their moisture.

The invention will now be further described by way of the following examples.

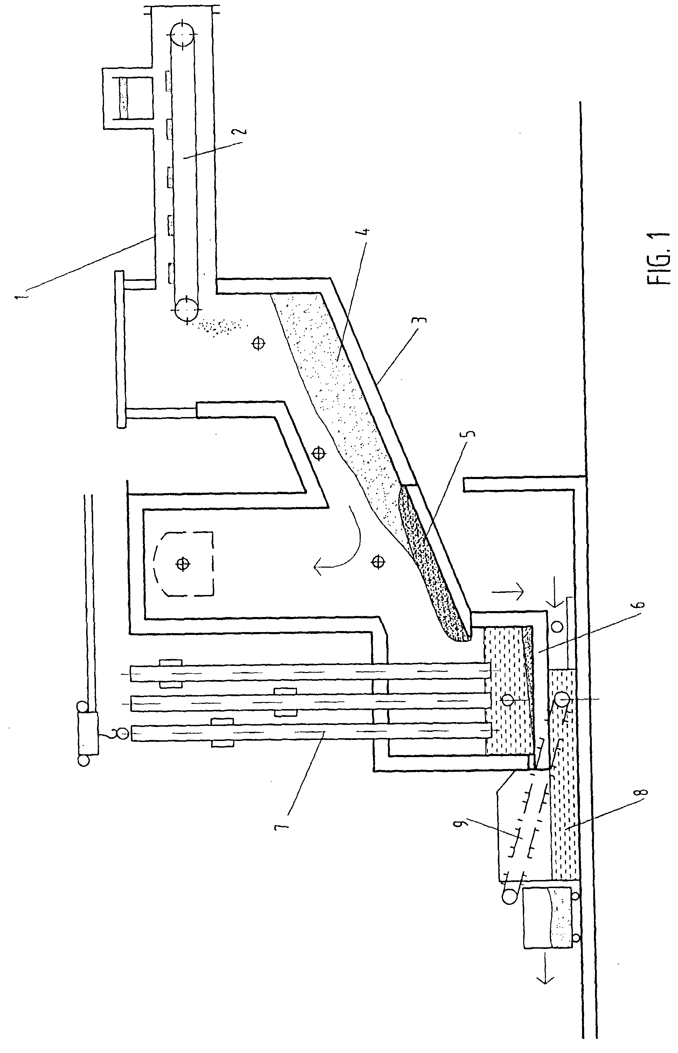

Figure 1 is a schematic view of an apparatus for working a particular embodiment of the process according to the invention.

### Example 1 : Production of light porous aggregates

Various wastes have been charged in a drying drum and heated during about 5-10 min. at 600-800°C, for example by use of graphite electrodes; the mass obtained was then put into a melting apparatus (in which a restoration atmosphere was kept) for being heated at 1300-1600°C for 20-40 min., for example in an electric furnace, during which "correcting" oxides were added and the mixture homogenized. For the correction of the amount of oxides, flask, ashes and burden dust were put into melting. This melting was poured into a basin with cold water, so as to quench it at a speed of cooling of about 500°C per minute.

The cooled glass mass obtained was then ground in a spherical mill up to 2500cm²/g, in which coal was ground together with the glass mass. Granules from the glass mass were formed on a plate granulator and solution of glassware (1.15 g/cm³) was put into the granulator. The granules obtained were dried in a drying drum and roasted in a rotated kiln. Some of smoke gases from the rotated kiln were directed into the drying drum and then into the melting machine. The other part was send only directly into the melting machine.

More particularly, six differents types of aggregate materials have been prepared from various kinds of wastes mixtures, as follows :
- Samples No 1,4,5 and 6 : building and domestic wastes (old concrete, stone, wood, metal, building garbage)
- Sample No 2 : domestic and industrial wastes from radio and engine plants
- Sample No 3 : domestic and industrial wastes from town and medical wastes (hospitals).

The respective compositions and production conditions have been reported in Table I.

Some physico-chemical characteristics have been measured on the above six aggregate samples and on a comparison sample; this comparison sample was prepared from slag of an electric power station obtained at 12-15% coal burning from waste, but without a heat treatment at high temperature, and which contained heavy metals oxides not "blocked" in the granules.

In addition to density and crack hardness measurements, other properties have been evaluated, more particularly acid resistance, alcali resistance and resistance to "attack" by water. These evaluations were made on 0.5-1mm grinded aggregates in solutions of sulfuric acid, respectively of potassium hydroxyde, and in distilled water, and given as ratio of mass aggregate before and after the test.

Finally, heavy metals "migration" from the aggregates into water was performed; these aggregates have been powdered with distilled water and maintained in it for about ten days. The results obtained by the above measurements and evaluations are reported in the following Table II.

The heavy metals contents measured in water were lower than about 0.01 wt% for the six samples according to the invention, whereas about 1.25 mg/dm³ of such heavy metals was recovered for the comparison sample.

The results reported in Table II further clearly show that the aggregate material according to the invention give much better results of chemical resistance; therefore, this material is well appropriate for being used as building material, as heat insulating material, as drainage filling, as filtering material, as well as in agriculture, especially in hydroponics, since it is not toxic and not polluting the environment.

### Example 2 : Treatment of fly ashes

Three different samples of fly ashes (Z1, Z2, Z3) with high heavy metals contents recovered from waste treatment plants have been submitted to the process according to the invention. More particularly, 60 kg of each sample have been charged in an electric furnace by 5kg every 5 min., preheated, and melted at about 1450°C, this during a total time of about 70 min. The melt thus obtained was then quenched in water so as to form a glassy mass in which the heavy metals remaining have been blocked. This was clearly shown from the results of the analysis made on the powdered amorphous mass of each sample Z1,Z2,Z3 treated, and which are reported in Table III, more particularly the analysis of the metals in the water containing such powders (A01,A02,A03)

**Table I**

| | AGGREGATE SAMPLES No | | | | | |
|---|---|---|---|---|---|---|
| No | 1 | 2 | 3 | 4 | 5 | 6 |
| a) Contents of oxides in melt (wt%) | | | | | | |
| oxides of silicon | 55 | 65 | 65 | 62 | 62 | 68 |
| oxides of iron | 6 | 6 | 3 | 6 | 3 | 6 |
| oxide of aluminium | 22 | 10 | 22 | 17 | 20 | 20 |
| oxides of alkali metals | 7 | 7 | 6.9 | 6 | 7 | 3 |
| oxides of alkaline-earth metals | 7 | 7 | 3 | 6 | 5 | 5 |
| oxides of heavy metals | 3 | 5 | 0.1 | 3 | 3 | 3 |
| b) Heat treatment of waste products : | | | | | | |
| temperature (°C) | 600 | 800 | 800 | 700 | 700 | 700 |
| time (min) | 10 | 5 | 5 | 7 | 7 | 7 |
| c) Melt: temperature (°C) | 1500 | 1460 | 1600 | 1300 | 1450 | 1450 |
| time (min) | 37 | 35 | 40 | 20 | 35 | 35 |
| d) Charge composition (wt%) | | | | | | |
| glass mass | 89 | 89 | 94.5 | 83.5 | 89 | 96.5 |
| coal | 1 | 1 | 0.5 | 1.5 | 1 | 1 |
| clay | 10 | 10 | 5 | 15 | 10 | ― |
| glassware | ― | ― | ― | ― | ― | 2.5 |

**Table II**

| Properties | Aggregates No | | | | | Comparison | |
|---|---|---|---|---|---|---|---|
| | 1 | 2 | 3 | 4 | 5 | 6 | |
| density (kg/m³) | 310 | 325 | 350 | 305 | 295 | 285 | 300 |
| crack hardness (kgc/m²) | 4 | 4.5 | 5 | 3.5 | 3 | 3 | 3.5 |
| acid resistance (%) | 97.8 | 97.5 | 98 | 98 | 97.5 | 97 | 93 |
| alkali resistance (%) | 86 | 82 | 90 | 90 | 87 | 80 | 72 |
| hydroscopicity (%) | 99.9 | 99.9 | 99.9 | 99.9 | 99.9 | 99.9 | 97 |

Finally, it should be pointed ou that the amorphous material obtained by the process according to the present invention can be advantageously used in the form of powder in the preparation of concrete, for example as building material.

**TABLE III**

| Fly ashes | | | | | | |
|---|---|---|---|---|---|---|
| Metals | Analysis of metals in the starting material (mg/kg) | | | Analysis of metal in water containing the material after treatment (mg/lt) | | |
| | Z1 | Z2 | Z3 | A01 | A02 | A03 |
| As | 60 | 59 | 84 | < 0.001 | < 0.001 | < 0.001 |
| Bi | < 0.001 | < 0.001 | < 0.001 | < 0.001 | < 0.001 | < 0.001 |
| Cd | 66 | 68 | 105 | 0.006 | 0.003 | < 0.001 |
| Co | 3.16 | 3.37 | 7.1 | 0.018 | < 0.001 | < 0.001 |
| Cr | 306 | 281 | 440 | 0.170 | 0.050 | 0.035 |
| Cu | 650 | 660 | 1030 | < 0.001 | < 0.001 | < 0.001 |
| Fe | 15'000 | 13'700 | 17'200 | < 0.001 | < 0.001 | < 0.001 |
| Li | 0.83 | 2.73 | 2.95 | 0.010 | < 0.001 | < 0.001 |
| Mg | 5'500 | 5'600 | 8'300 | 6.69 | 2.96 | 5.31 |
| Mn | 1'330 | 1'280 | 1'970 | 0.020 | 0.006 | 0.016 |
| Mo | 22.1 | 25 | 0.001 | 0.020 | 0.021 | < 0.001 |
| Ni | 13.7 | 16.1 | <0.001 | < 0.001 | < 0.001 | < 0.001 |
| Pb | 2'570 | 2'530 | 3'800 | < 0.001 | < 0.001 | < 0.001 |
| Ti | 810 | 810 | 1'160 | < 0.001 | < 0.001 | < 0.001 |
| V | 18.2 | 19.0 | 18.8 | < 0.001 | < 0.001 | < 0.001 |
| Zn | 5'000 | 5'000 | 7'800 | < 0.001 | < 0..01 | < 0.030 |

### Example 3 : Treatment of slags

Slags resulting for example from usually incinerated municipal wastes are treated in a particular apparatus, as schematically illustrated on Figure 1.

As shown on this Figure 1, the apparatus comprises the four following different parts :
(a) A feeding zone 1 comprising means 2 for bringing the wastes into the furnace in which the wastes are if necessary dried either by special means or by the hot gazes (600-800°C) coming from the other parts of the apparatus.
(b) A sloping hearth 3, on the top portion 4 of which the wastes are burned and pre-melted at about 1000-1200°C; the pre-melted wastes thus slide downwards on the surface of the sloping sole which is covered by a refractory coating, so as to reach a temperature of 1200-1300°C in the lower portion 5 of the slope, where a partial transition of the mineral part of the wastes into a "pyroplastic" state takes place.
   The regulation of the temperature provides a state when the top relatively liquid layer of the melting slag is flowing down on the lower layer of the slag which is maintained in a relatively solid state. The lower solid layer of slag is formed during the primary melting of wastes and is maintained in this state.
(c) The melt then flows down into a crucible 6, in which the temperature is maintained at 1300-1450°C, by electrodes 7. In the meantime, the melt is analyzed and then mixed with the appropriate correcting additives, under splashing with oxygen or heated air so as to better homogeneize -the fused mass. Then, the thus treated melt is poured out from the crucible 6 into a quenching bath 8, in which the melt is submitted to a very fast cooling. The apparatus further comprises means 9 for recovering the aimed amorphous material from the quenching bath 8.

The amorphous material recovered can be then grinded, and the product obtained as a powder can be advantageously used as additive in the preparation of cements.

The initial composition of the slag was as follows :
Si02 - 35%
A1203 - 15%
Fe203 + Fe0 - 6%
Ca0 - 1.5%
Mg0 - 3%
SO3 - 4%
K20 + Na20 - 8%

After addition of correcting line, i.e. about 7 kg of CaO per 100kg of the melt, the final composition of the product obtained included 32.2% of SiO₂, 13.4% of Al₂O₃ and 4.5% of CaO, which correspond to the usual required oxides percentages of the active mineral additions to cements.

## Claims

1. Process for the production of amorphous material from non sorted wastes, which comprises the steps of
- drying and heat treating the wastes at 600-1200°C, so as to oxidize the organic material and to evaporate the volatile products,
- melting said wastes at 1300-1600°C,
- transforming the melt into an amorphous glassy mass by fast cooling thereof in water, and recovering said amorphous material, and which comprises the introduction of additives during the heat treating step and/or the melting step in such respective quantities so as to provide the following contents of oxides in the melt :
| | |
|---|---|
| silicon oxide | 30-70 wt% |
| aluminium oxide | 5-30 |
| iron oxides | 1-10 |
| alkali metals oxides | 1-10 |
| alkaline-earth metals oxides | 1-10 |
| heavy metals oxides | 0.1-5 |

2. Process according to claim 1, which comprises the drying of the wastes at 600-800°C and then the heat treating and pre-melting thereof at 1000-1200°C.

3. Process according to claim 1, which comprises pre-melting by heat treating the wastes at 1000-1200°C on a sloping hearth and treating the melt at 1300-1450°C in a crucible for homogeneizing said melt.

4. Process according to one of claims 1 to 3, in which the heat treating step is carried out during 5 to 10 min, and the melting step during 20 to 40 min., and in which the fast cooling step takes place at a speed of about 500-600°C by minute.

5. Process according to one of claims 1 to 4, in which the oxides contents ratio are the following : 55-65% of silicon oxide, 10-22% of aluminium oxide, 3-6% of iron oxides, 3-7% of alkali metals oxides and 3-7% of alkaline-earth metals oxides.

6. Process according to one of claims 1 to 5, in which the silicon containing additive is quartz sand, sandy loam, flask or tropoyl, the aluminium containing additive is clay, loam, bauxite, ashes of heat power stations, and the iron containing additive is burden dust or pyrite candel ends.

7. Process according to one of claims 1 to 6, in which the wastes treated are slags and/or fly ashes obtained by other waste treatment processes.

8. Process according to one of claims 1 to 7 for the production of light porous aggregates, which further comprises the steps of grinding and granulating the amorphous material as obtained, then of roasting the granules formed in presence of organic compounds and binders, which are added during the grinding step and/or the granulation step, and so as to provide the porous aggregates.

9. Process according to claim 8, in which from 0.5 to 1.5 wt % of organic compounds are added, which can be selected from solid or liquid organic containing materials such as coal, oil slurry and used oil, and in which from 1.5 to 15 wt% of binders are added which can be for example highly plastic clays or a solution of glassware.

10. Process according to claims 8 or 9, in which smoke gases from the final roasting step are recycled for the drying step and/or for the melting step.

11. Amorphous material as obtained by the process according to one of claims 1 to 7.

12. Use of the amorphous material according to claim 11, in the powder form, as an additive in the production of cement or concrete.

13. Light porous aggregates in the form of granules as obtained by the process according to one of claims 8 to 10.

14. Use of the granules according to claim 13 as building, insulating, drainage or filtering material.

## Patentansprüche

1. Verfahren zum Herstellen eines amorphen Materials aus unsortierten Abfällen, das die Schritte umfasst,
- die Abfälle bei 600 - 1200 °C zu trocken und thermisch zu behandeln, um das organische Material zu oxidieren und die flüchtigen Produkte zu verdampfen,
- die benannten Abfälle bei 1300 - 1600 °C zu schmelzen,
- die Schmelze durch ihre rasche Abkühlung in Wasser in eine amorphe, glasartige Masse umzuwandeln und das benannte amorphe Material zurückzugewinnen, und das die Einführung von Zusatzstoffen während des thermischen Behandlungsschrittes und/oder Schmelzschrittes in solchen Mengen umfasst, dass die folgenden Oxidgehalte in der Schmelze gewährleistet werden:
| | |
|---|---|
| Siliciumoxid | 30 - 70 Gewichtsprozent |
| Aluminiumoxid | 5 - 30 |
| Eisenoxide | 1 - 10 |
| Alkalimetalloxide | 1 - 10 |
| Erdalkalimetalloxide | 1 - 10 |
| Schwermetalloxide | 0,1 - 5 |

2. Verfahren nach Anspruch 1, das das Trocknen der Abfälle bei 600 - 800 °C und dann deren thermische Behandlung und Anschmelzen bei 1000 - 1200 °C umfasst.

3. Verfahren nach Anspruch 1, das das Anschmelzen durch thermische Behandlung der Abfälle bei 1000 - 1200 °C auf einem Schrägherdofen und die Behandlung der Schmelze bei 1300 - 1450 °C in einem Tiegel zur Homogenisierung der benannten Schmelze umfasst.

4. Verfahren nach einem der Ansprüche 1 bis 3, in dem der thermische Behandlungsschritt während 5 bis 10 Minuten und der Schmelzschritt während 20 bis 40 Minuten erfolgt und in dem der rasche Abkühlungsschritt bei einer Geschwindigkeit von etwa 500 - 600 °C pro Minute erfolgt.

5. Verfahren nach einem der Ansprüche 1 bis 4, in dem die Oxidgehaltsverhältnisse wie folgt sind: 55 - 65 % Siliciumoxid, 10 - 22 % Aluminiumoxid, 3 - 6 % Eisenoxide, 3 - 7 % Alkalimetalloxide und 3 - 7 % Erdalkalimetalloxide.

6. Verfahren nach einem der Ansprüche 1 bis 5, in dem der siliciumhaltige Zusatzstoff Quarzsand, sandiger Lehm, Flugasche oder Tripelerde, der aluminiumhaltige Zusatzstoff Ton, Lehm, Bauxit, thermische Kraftwerksasche und der eisenhaltige Zusatzstoff Möllerstaub oder Kiesabbrände sind.

7. Verfahren nach einem der Ansprüche 1 bis 6, in dem die behandelten Abfälle durch andere Abfallbehandlungsverfahren erhaltene Schlacken und/oder Flugaschen sind.

8. Verfahren nach einem der Ansprüche 1 bis 7 zum Herstellen leichter, poröser Zuschlagstoffe, das weiter die Schritte umfasst, das anfallende amorphe Material zu mahlen und granulieren, die gebildeten Körnchen dann in Gegenwart von organischen Verbindungen und Bindemitteln zu rösten, die während des Mahlschrittes und/oder des Granulierungsschrittes zugegeben werden, und so die porösen Zuschlagstoffe zu schaffen.

9. Verfahren nach Anspruch 8, in dem zwischen 0,5 und 1,5 Gewichtsprozent an organischen Verbindungen hinzugefügt werden, die aus festen und flüssigen organisch-haltigen Materialen wie Kohle, Ölaufschlämmung und Altöl ausgewählt werden können, und in dem zwischen 1,5 und 15 Gewichtsprozent an Bindemitteln hinzugefügt werden, die zum Beispiel Weichton oder Wasserglaslösung sein können.

10. Verfahren nach Ansprüchen 8 oder 9, in dem Rauchgase aus dem abschliessenden Röstschritt für den Trockenschritt und/oder für den Schmelzschritt zurückgeführt werden.

11. Amorphes Material wie durch das Verfahren nach einem der Ansprüche 1 bis 7 gewonnen.

12. Verwendung des amorphen Materials nach Anspruch 11 in Pulverform als Zusatzstoff in der Herstellung von Zement oder Beton.

13. Leichte poröse Zuschlagstoffe in Gestalt von Körnchen, wie durch das Verfahren nach einem der Ansprüche 8 bis 10 gewonnen.

14. Verwendung der Körnchen nach Anspruch 13 als Bau-, Isolier-, Dränage- oder Filtermaterial.

## Revendications

1. Procédé de production d'un matériau amorphe à partir de déchets non triés, qui comprend les étapes consistant à :
- sécher et à traiter par la chaleur les déchets à 600- 1200 °C de manière à oxyder les matières organiques et à évaporer les produits volatiles,
- à fondre lesdits déchets à 1300 - 1600 °C,
- à transformer la matière fondue en une masse vitreuse amorphe par un refroidissement rapide de celle-ci dans l'eau et à récupérer lesdites matières amorphes, lequel procédé comprend d'introduire des additifs durant l'étape de traitement par la chaleur et / ou l'étape de fusion dans des quantités respectives permettant d'assurer les teneurs en oxydes suivantes dans les matières en fusion :
| | |
|---|---|
| oxyde de silicium | 30 - 70 % en poids |
| oxyde d'aluminium | 5 - 30 |
| oxydes de fer | 1 - 10 |
| oxydes de métaux alcalins | 1 - 10 |
| oxydes de métaux alcalino-terreux | 1 - 10 |
| oxydes de métaux lourds | 0,1 - 5 |

2. Procédé selon la revendication 1, qui comprend de sécher les déchets à 600 - 800 °C, puis de les traiter par la chaleur et de les pré-fondre à 1000 - 1200 °C.

3. Procédé selon la revendication 1, qui comprend de pré-fondre les déchets en les traitant par la chaleur à 1000 - 1200 °C dans un four incliné et à traiter les matières fondues à 1300 - 1450 °C dans un creuset pour homogénéiser lesdites matières fondues.

4. Procédé selon l'une des revendications 1 à 3, dans lequel l'étape de traitement par la chaleur dure de 5 à 10 min. et l'étape de fusion dure de 20 à 40 min. et dans lequel l'étape de refroidissement rapide se fait à une vitesse d'environ 500 - 600 °C par minute.

5. Procédé selon l'une des revendications 1 à 4, dans lequel les teneurs en oxydes sont les suivantes : 55 - 65 d'oxyde de silicium, 10 - 22 % d'oxyde d'aluminium, 3 - 6 % d'oxydes de fer, 3 - 7 % d'oxydes de métaux alcalins et 3 - 7 % d'oxydes de métaux alcalino-terreux.

6. Procédé selon l'une des revendications 1 à 5, dans lequel l'additif contenant du silicium est du sable de quartz, du limon sableux, des bouteilles ou du tropoyle, l'additif contenant de l'aluminium est l'argile, le limon, la bauxite, les cendres des centrales thermiques et l'additif contenant du fer est de la poussière de charge ou des extrémités de barres de pyrite.

7. Procédé selon l'une des revendications 1 à 6, dans lequel les déchets traités sont des scories et / ou des cendres volantes obtenues par d'autres procédés de traitement de déchets.

8. Procédé selon l'une des revendications 1 à 7 pour la production d'agrégats poreux légers, comprenant en outre les étapes consistant à broyer et à granuler le matériau amorphe obtenu, puis à griller les granulés formés en présence de composés organiques et de liants, qui sont ajoutés durant l'étape de broyage et / ou l'étape de granulation, de manière à fournir des agrégats poreux.

9. Procédé selon la revendication 8, dans lequel on ajoute de 0,5 à 1,5 % en poids de composés organiques, lesquels composés organiques peuvent être choisis parmi des matériaux contenant des matières organiques solides ou liquides telles que le charbon, les huiles lourdes et les huiles usées, auxquels on a ajouté de 1,5 à 15 % en poids d'un liant, qui peut être, par exemple, une argile hautement plastique ou une solution de verre.

10. Procédé selon la revendication 8 ou la revendication 9, dans lequel les gaz (fumées) de l'étape finale de grillage sont recyclés vers le séchage et / ou vers la fusion.

11. Matériau amorphe obtenu par le procédé selon l'une des revendications 1 à 7.

12. Utilisation d'un matériau amorphe selon la revendication 11 sous forme pulvérulente, comme additif pour la production de ciment ou de béton.

13. Agrégat poreux léger sous la forme de granulés, obtenu selon le procédé de l'une des revendications 8 à 10.

14. Utilisation des granulés selon la revendication 13 comme matériau de construction, comme matériau isolant, de drainage ou de filtration.
